# EUROPEAN PATENT APPLICATION

(11) **EP 2 538 722 A1**
(43) Date of publication of application: **26.12.2012**
(21) Application number: 11742366.5
(22) Date of filing: 15.02.2011
(51) Int. Cl.: H04W 36/14, H04W 48/18, H04W 88/06

(54) **MOBILE COMMUNICATION SYSTEM, NETWORK DEVICE, AND MOBILE COMMUNICATION METHOD**

(30) Priority: 15.02.2010 JP 2010029999
(71) Applicant: NTT DoCoMo, Inc., Tokyo 100-6150 (JP)
(72) Inventor: NAKAMURA, Yuichiro, Tokyo 100-6150 (JP); AOYAGI, Kenichiro, Tokyo 100-6150 (JP); MATSUTANI, Hideyuki, Tokyo 100-6150 (JP)
(74) Representative: HOFFMANN EITLE
(86) International application number: PCT/JP2011/053160
(87) International publication number: WO 2011/099627

(57) **Abstract**

In a handover procedure though which a bearer for the first communication call established between the first communication system and a mobile communication terminal is switched to a bearer for the first communication call established between the second communication system and the mobile communication terminal, the second communication system determines whether to establish the bearer for the first communication call between the second communication system and the mobile communication terminal based on whether the first communication call is established between the first communication system and the mobile communication terminal or the data amount of the first communication call established between the first communication system and the mobile communication terminal.

## Description

### TECHNICAL FIELD

The present invention relates to a mobile communication system including a first communication system and a second communication system, a network device provided in the mobile communication system, and a mobile communication method employed in the mobile communication system.

### BACKGROUND ART

Recently, a first mobile communication system (first RAT (Radio Access Technology)) has been known that does not support a CS (Circuit Switching) call. The first communication system is, for example, a communication system that supports LTE (Long Term Evolution).

CS FALL BACK (hereinafter, CSFB) is known as a scheme to control reception or transmission of a CS call by a mobile communication terminal (UE) in the first communication system (for example, Non-Patent Documents 1 to 5).

In CSFB, the mobile communication terminal (UE) is instructed to perform transition to a second communication system (second RAT) that supports the CS call. As a method for transition to the second communication system, Inter-RAT handover (hereinafter, PS handover) is a known method for transition of a PS (Packet Switching) call established in the first communication system to the second communication system. In the PS handover, the PS call is established in the second communication system, and then the CS call is established in the second communication system.

Specifically, in the PS handover, in the case where the mobile communication terminal is in a standby in the first communication system, a PS call is established between the mobile communication terminal and the first communication system, and the PS call established in the first communication system is handed over to the second communication system.

Alternatively, in the PS handover, in the case where the mobile communication terminal is in communication in the first communication system, the PS call established between the communication terminal and the first communication system is handed over to the second communication system

The PS handover is deemed advantageous especially in that while performing the PS communication in the first system, the mobile communication terminal can connect to the second communication system without interruption of the PS communication by performing a handover of the PS call to the second communication system.

### PRIOR ART DOCUMENTS

### NON-PATENT DOCUMENTS

NON-PATENT DOCUMENT 1: 3GPP TS23.272 V9.2.0
NON-PATENT DOCUMENT 2: 3GPP TS25.331 V9.1.0
NON-PATENT DOCUMENT 3: 3GPP TS36.331 V9.1.0
NON-PATENT DOCUMENT 4: 3GPP TS25.413 V9.1.0
NON-PATENT DOCUMENT 5: 3GPP TS36.413 V9.1.0

### SUMMARY OF THE INVENTION

As described above, in the PS handover, a PS bearer is established between the second communication system and the mobile communication terminal regardless of whether a PS call is established in the first communication system. The PS handover is carried out without the second communication system knowing the used condition of the PS call by the mobile communication terminal in the first communication system.

In such a PS handover, for example, if the PS call is not established in the first communication system, the PS bearer established between the second communication system and the mobile communication terminal is not actually used. Thus, resource for the established PS bearer is wasted.

The present invention is made to solve the above problem and an objective of the present invention is to provide a mobile communication system, a network device, and a mobile communication method that allow an effective utilization of resource for a PS bearer established between a mobile communication terminal and a second communication system in a transition of the mobile communication terminal from a first communication system to the second communication system.

A mobile communication system according to the first feature of the present invention includes a first communication system that supports a first communication call as a call type and a second communication system that supports both of the first communication call and a second communication call as a call type, the mobile communication system configured to perform a handover procedure though which a bearer for the first communication call established between the first communication system and a mobile communication terminal is switched to a bearer for the first communication call established between the second communication system and the mobile communication terminal. In the handover procedure, the second communication system identifies whether the first communication call is established between the first communication system and the mobile communication terminal or a data amount of the first communication call established between the first communication system and the mobile communication terminal, and the second communication system determines whether to establish the bearer for the first communication call between the second communication system and the mobile communication terminal based on whether the first communication call is established between the first communication system and the mobile communication terminal or the data amount of the first communication call established between the first communication system and the mobile communication terminal.

In the first feature, the second communication system does not establish the bearer for the first communication call between the second communication system and the mobile communication terminal and may notify the first communication system that, while the first communication call is not able to be established, the second communication call is able to be established, when the first communication call is not established between the first communication system and the mobile communication terminal or when the data amount of the first communication call established between the first communication system and the mobile communication terminal is equal to or smaller than a predetermined threshold.

In the first feature, the first communication system does not support the second communication call, the handover procedure may start when establishment of the second communication call is requested in the first communication system, and the second communication system may establish the bearer for the first communication call between the second communication system and the mobile communication terminal and releases the established first communication call, when the first communication call is not established between the first communication system and the mobile communication terminal or when the data amount of the first communication call established between the first communication system and the mobile communication terminal is equal to or smaller than a predetermined threshold.

In the first feature, the second communication system may establish the bearer for the first communication call between the second communication system and the mobile communication terminal using resource in saving manner, when the first communication call is not established between the first communication system and the mobile communication terminal or when the data amount of the first communication call established between the first communication system and the mobile communication terminal is equal to or smaller than the predetermined threshold.

In the first feature, the first communication system does not support the second communication call, the handover procedure may start when establishment of the second communication call is requested in the first communication system, and the first communication system may stop the handover procedure and instruct the mobile communication terminal to perform a switch to the second communication system through a different handover procedure, when being notified that the first communication call is not able to be established but the second communication call is able to be established.

In the first feature, in the handover procedure, the first communication system may notify the second communication system whether the first communication call is established between the first communication system and the mobile communication terminal or of the data amount of the first communication call established between the first communication system and the mobile communication terminal.

A network device according the second feature is provided in a first communication system in a mobile communication system including the first communication system that supports a first communication call as a call type and a second communication system that supports both of the first communication call and a second communication call as a call type, the mobile communication system configured to perform a handover procedure though which a bearer for the first communication call established between the first communication system and a mobile communication terminal is switched to a bearer for the first communication call established between the second communication system and the mobile communication terminal. The device includes a notification unit configured to notify, in the handover procedure, the second communication system whether the first communication call is established between the first communication system and the mobile communication terminal or of a data amount of the first communication call established between the first communication system and the mobile communication terminal.

A network device according the third feature is provided in a first communication system in a mobile communication system including the first communication system that supports a first communication call as a call type and a second communication system that supports both of the first communication call and a second communication call as a call type, the mobile communication system configured to perform a handover procedure though which a bearer for the first communication call established between the first communication system and a mobile communication terminal is switched to a bearer for the first communication call established between the second communication system and the mobile communication terminal when an establishment of the second communication call is requested in the first communication system. The device includes an instruction unit configured to stop the handover procedure and instruct the mobile communication terminal to perform a switch to the second communication system through a different handover procedure, when the first communication call is not established between the first communication system and the mobile communication terminal or a data amount of the first communication call established between the first communication system and the mobile communication terminal is equal to or smaller than a predetermined threshold.

A network device according the fourth feature is provided in a second communication system in a mobile communication system including a first communication system that supports a first communication call as a call type and the second communication system that supports both of the first communication call and a second communication call as a call type, the mobile communication system configured to perform a handover procedure though which a bearer for the first communication call established between the first communication system and a mobile communication terminal is switched to a bearer for the first communication call established between the second communication system and the mobile communication terminal. The device includes an identification unit configured to identify whether the first communication call is established between the first communication system and the mobile communication terminal or a data amount of the first communication call established between the first communication system and the mobile communication terminal, and a determination unit configured to determine whether to establish the bearer for the first communication call between the second communication system and the mobile communication terminal based on whether the first communication call is established between the first communication system and the mobile communication terminal or the data amount of the first communication call established between the first communication system and the mobile communication terminal.

A mobile communication method according the fifth feature is employed in a mobile communication system including a first communication system that supports a first communication call as a call type and a second communication system that supports both of the first communication call and a second communication call as a call type, the mobile communication system configured to perform a handover procedure though which a bearer for the first communication call established between the first communication system and a mobile communication terminal is switched to a bearer for the first communication call established between the second communication system and the mobile communication terminal. The method includes the steps of: identifying, by the second communication system in the handover procedure, whether the first communication call is established between the first communication system and the mobile communication terminal or a data amount of the first communication call established between the first communication system and the mobile communication terminal; and determining, by the second communication system, whether to establish the bearer for the first communication call between the second communication system and the mobile communication terminal based on whether the first communication call is established between the first communication system and the mobile communication terminal or the data amount of the first communication call established between the first communication system and the mobile communication terminal.

### BRIER DESCRIPTION OF THE DRAWINGS

[Fig. 1] Fig. 1 is a drawing showing a mobile communication system 100 according to a first embodiment.
[Fig. 2] Fig. 2 is a block diagram of a network device 20 according to the first embodiment.
[Fig. 3] Fig. 3 is a block diagram of a network device 30 according to the first embodiment.
[Fig. 4] Fig. 4 is a sequence diagram showing operations in the mobile communication system 100 according to the first embodiment.

### MODES FOR CARRYING OUT THE INVENTION

A mobile communication system according to an embodiment of the present invention is described below with reference to the drawings. Note that, in the following description of the drawings, same or similar reference signs denote same or similar elements and portions.

In addition, it should be noted that the drawings are schematic and ratios of dimensions and the like are different from actual ones. Therefore, specific dimensions and the like should be determined in consideration of the following description. Moreover, the drawings also include portions having different dimensional relationships and ratios from each other.

### [Overview of Embodiment]

The mobile communication system according to the embodiment includes a first communication system supporting a first communication call as a call type, and a second communication system supporting both of the first communication call and a second communication call as a call type. The mobile communication system is configured to perform a handover procedure (PS handover) to switch a bearer for the first communication call established between the first communication system and a mobile communication terminal to a bearer for the first communication call established between the second communication system and the mobile communication terminal.

In the handover procedure, the second communication system identifies whether the first communication call is established between the first communication system and the mobile communication terminal, or identifies the data amount of the first communication call established between the first communication system and the mobile communication terminal. The second communication determines whether to establish the bearer for the first communication call between the second communication system and the mobile communication terminal based on whether the first communication call is established between the first communication system and the mobile communication terminal, or the data amount of the first communication call established between the first communication system and the mobile communication terminal

As described above, in the handover procedure, the second communication system determines whether to establish the bearer for the first communication call between the second communication system and the mobile communication terminal based on whether the first communication call is established between the first communication system and the mobile communication terminal, or the data amount of the first communication call established between the first communication system and the mobile communication terminal

Thus, wasteful consumption of the resource for the bearer of the first communication call established between the second communication system and the mobile communication terminal can be prevented, and the resource used for the bearer of the first communication call can be effectively utilized.

### [First Embodiment]

### (Configuration of Mobile Communication System)

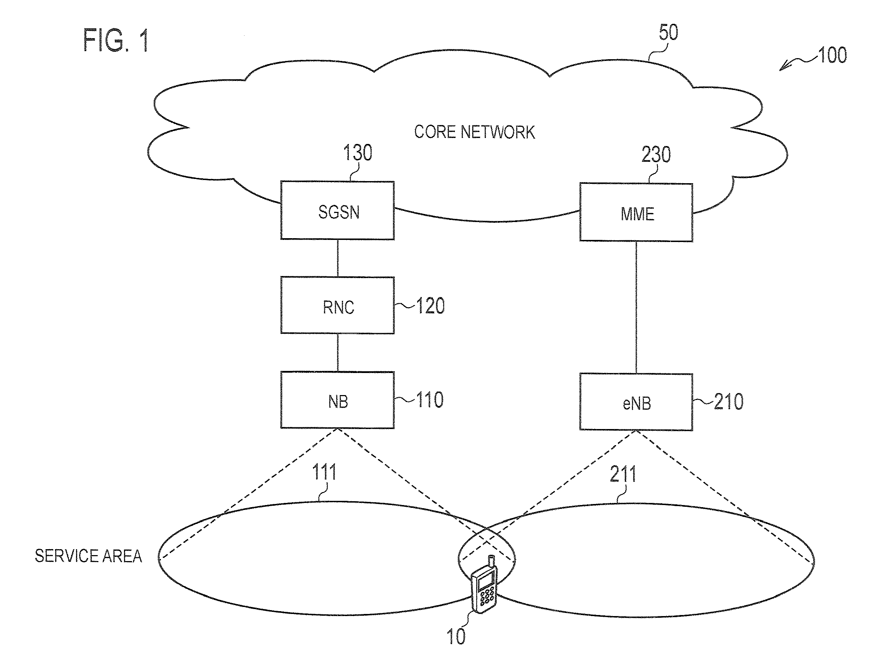

A configuration of a mobile communication system according to a first embodiment will be described below with reference to a drawing. Fig. 1 is a diagram showing a mobile communication system 100 according to the first embodiment.

As shown in Fig. 1, the mobile communication system 100 includes a communication terminal device 10 (hereinafter, UE 10) and a core network 50. The mobile communication system 100 further includes a first communication system and a second communication system.

The first communication system is, for example, a communication system supporting LTE (Long Term Evolution). For example, the first communication system includes a base station 210 (hereinafter, eNB 210) and an MME 230. In the first communication system, a first RAT (EUTRAN; Evolved Universal Terrestrial Access Network) is employed.

The second communication system is, for example, a communication system supporting WCDMA (Wideband Code Division Multiple Access). The second communication system includes a base station 110 (hereinafter NB 110), an RNC 120, and an SGSN 130. In the first communication system, a second RAT (UTRAN; Universal Terrestrial Access Network) is employed.

Here, the first communication system supports a first communication call (e.g., PS call) and does not support a second communication call (e.g., CS call). The second communication system supports both of the first communication system (e.g., PS call) and the second communication call (e.g., CS call).

CS FALL BACK (hereinafter, CSFB) is known as a scheme for controlling reception or transmission of the second communication call by the UE 10 in the first communication system.

In CSFB, the UE 10 is instructed to perform a transition to the second communication system supporting the second communication call. One possible method for transition to the second communication system is Inter-RAT handover (hereinafter, PS handover) for handover of a PS (Packet Switching) call established in the first communication system to the second communication system.

Specifically, in the PS handover, a bearer for the first communication call is newly established between the second communication system and the UE 10. The bearer for the first communication call established between the first communication system and the UE 10 is switched to the bearer for the first communication call established between the second communication system and the UE 10. Then, the second communication call is established between the second communication system and the UE 10.

The UE 10 is a device (User Equipment) configured to communicate with the first communication system and the second communication system. For example, the UE 10 has a function of performing radio communications with the NB 110 and a function of performing radio communications with the eNB 210.

The NB 110 includes a cell 111 and is a device (NodeB) that performs radio communications with the UE 10 in the cell 111.

The RNC 120 is a device (Radio Network Controller) that is connected to the NB 110 and establishes a radio connection (RRC Connection) with the UE 10 in the cell 111.

The SGSN 130 is a device (Serving GPRS Support Node) that exchange packets in a packet switching domain. The SGSN 130 is provided in the core network 50. Although not shown in Fig. 1, a device (MSC; Mobile Switching Center) that switches calls in a call switch domain may be provided in the core network 50.

The eNB 210 is a device (evolved NodeB) that has a cell 211 and performs radio communications with the UE 10 in the cell 211.

The MME 230 is a device (Mobility Management Entity) that manages the mobility of the UE 10 that established a radio communication with the eNB 210. The MME 230 is provided in the core network 50.

The cell should be understood as a function for performing radio communications with the UE 10. The cell may also be regarded as a service area in which the communications with the cell is allowed. The cell is identified by a frequency, a diffusion cord, a timeslot, or the like used in the cell.

### (Configuration of Network Device)

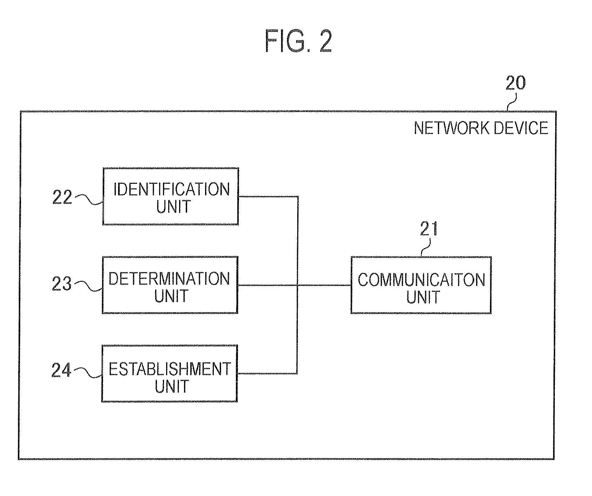

A configuration of a network device according to the first embodiment is described below with reference to a drawing. Fig. 2 is a diagram showing a network device 20 according to the first embodiment.

In the first embodiment, the network device 20 is provided in the second communication system. For example, the network device 20 is an RNC 120.

In the first embodiment, a description is given on a case where the PS handover procedure as a procedure of CSFB begins when the establishment of a second communication call is requested for the reception or the transmission of the second communication call. Hereinbelow, a function of the network device 20 provided in the second communication system in such a case will be mainly described.

As shown in Fig. 2, the network device 20 includes a communication unit 21, an identification unit 22, a determination unit 23, and an establishment unit 24.

The communication unit 21 communicates with a network device (e.g., eNB 210) provided in the first communication system. For example, the communication unit 21 receives an information element indicating an establishment condition of the first call (PS call) of the UE 10 in the first communication system.

Specifically, the communication unit 21 receives an information element indicating whether the first call is established between the first communication system and the UE 10. Alternatively, the communication unit 21 receives an information element indicating a data amount of the first communication call established between the first communication system and the UE 10.

The information element indicating the establishment condition of the first communication call is notified from another network device (eNB 210 or MME 230) provided in the first communication system through the SGSN 130. For example, in the procedure of CSFB (PS handover), the eNB 210 sets up the information element indicating the establishment condition of the first communication call in a message (HANDOVER REQUIRED) requesting the PS handover from the first communication system to the second communication system. Such a message (HANDOVER REQUIRED) is transmitted from the eNB 210 to the MME 230. Alternatively, the MME 230 may set up the information element indicating the establishment condition of the first communication call in the message (HANDOVER REQUIRED) received from the eNB 210. Such a message (HANDOVER REQUIRED) is transmitted from the MME 230 to the eNB 210 through the SGSN 130.

The information element indicating the establishment condition of the first communication call may be included in "Message Cause" used in a protocol (S1AP) between the eNB 210 and the MME 230.

The identification unit 22 identifies the establishment condition of the first communication call (PS call) of the UE 10 in the first communication system. Specifically, the identification unit 22 identifies whether the first communication call is established between the first communication system and the UE 10 based on a message (e.g., "REALLOCATION REQUEST") received from another network device in the procedure of the PS handover. Alternatively, the identification unit 22 identifies the data amount of the first communication call established between the first communication system and the UE 10 based on a message (e.g., "REALLOCATION REQUEST") received from another network device in the procedure of the PS handover.

The determination unit 23 determines whether to establish a bearer for the first communication call between the second communication system and the UE 10 based on whether the first communication call is established between the first communication system and the UE 10 or the data amount of the first communication call established between the first communication system and the UE 10. Specifically, the determination unit 23 determines whether to establish the first communication call in the following patterns.

(1A) The determination unit 23 determines not to establish the bearer for the first communication call between the second communication system and the UE 10 when the first communication call is not established between the first communication system and the UE 10 or when the data amount of the first communication call established between the first communication system and the UE 10 is equal to or smaller than a predetermined threshold.

(2A) The determination unit 23 determines to establish the bearer for the first communication call between the second communication system and the UE 10 and release the established first communication call when the first communication call is not established between the first communication system and the UE 10 or when the data amount of the first communication call established between the first communication system and the UE 10 is equal to or smaller than the predetermined threshold.

(3A) The determination unit 23 determines to establish the first communication call between the second communication system and the UE 10 using resource in saving manner when the first communication call is not established between the first communication system and the UE 10 or when the data amount of the first communication call established between the first communication system and the UE 10 is equal to or smaller than the predetermined threshold. "Establish using resource in saving manner" means to establish only DCCH without establishing DTCH for example. Thus, the resource in saving manner is a term indicating resource smaller than resource used in normal manner mentioned below.

(4A) The determination unit 23 determines to establish the first communication call between the second communication system and the UE 10 using the resource in normal manner when the first communication call is established between the first communication system and the UE 10 or when the data amount of the first communication call established between the first communication system and the UE 10 exceeds the predetermined threshold. "Establish using the resource in normal manner" means to establish the DTCH and the DCCH for example.

The establishment unit 24 establishes the bearer for the first communication call between the second communication system and the UE 10. Alternatively, the establishment unit 24 establishes the bearer for the second communication call between the second communication system and the UE 10. Specifically, the establishment unit 24 controls the establishment of the fist communication call in accordance with the result of the determination by the determination unit 23 in the following patterns.

(1B) In accordance with the result of the determination in (1A) described above, the establishment unit 24 does not establish the bearer for the first communication call between the second communication system and the UE 10. The establishment unit 24 instructs the communication unit 21 to notify the first communication system that while the first communication call cannot be established, the second communication call can be established.

(2A) In accordance with the result of the determination in (2A) described above, the establishment unit 24 establishes the bearer for the first communication call between the second communication system and the UE 10 and releases the established first communication call. Specifically, the establishment unit 24 may immediately release the first communication call established in the PS handover after the PS handover is completed. Alternatively, the establishment unit 24 may release the first communication call established in the PS handover when the bearer for the second communication call of which the establishment is requested in the first communication system is established.

The establishment unit 24 may switch the bearer of the first communication call established in the PS handover to the second communication call of which the establishment is requested in the first communication system (SRVCC; Single Radio Voice Call Continuity).

(3B) In accordance with the result of the determination in (3A) described above, the establishment unit 24 establishes the first communication call between the second communication system and the UE 10 in the PS handover using the resource in saving manner. As described above, the establishment unit 24 establishes the DCCH without establishing the DTCH for example.

(4B) In accordance with the result of the determination in (3B) described above, the establishment unit 24 establishes the first communication call between the second communication system and the UE 10 in the PS handover using the resource in normal manner. As described above, the establishment unit 24 establishes the DTCH and the DCCH for example.

### (Configuration of Network Device)

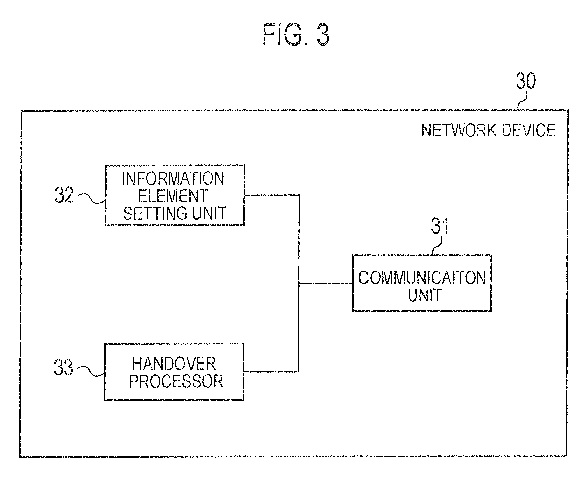

A configuration of a network device according to the first embodiment is described below with reference to a drawing. Fig. 3 is a diagram showing a network device 30 according to the first embodiment

In the first embodiment, the network device 30 is provided in the first communication system. For example, the network device 30 is the eNB 210.

In the first embodiment, a description is mainly given on a function of the network device 30 provided in the first communication system in a case where the PS handover procedure starts as a procedure of CSFB.

As shown in Fig. 3, the network device 30 includes a communication unit 31, an information element setting unit 32, and a handover processor 33.

The communication unit 31 communicates with the network device 20 (e.g. , RNC 120) provided in the second communication system. For example, the communication unit 31 transmits an information element indicating an establishment condition of the first call (PS call) of the UE 10 in the first communication system to the second communication system. As described above, the information element indicating the establishment condition of the first communication call (PS call) is an information element indicating whether the first call is established between the first communication system and the UE 10 or an information element indicating a data amount of the first communication call established between the first communication system and the UE 10.

The communication unit 31 receives a UE 10 terminating request (Paging) from an upper level node (MME 230). Alternatively, the communication unit 31 receives a UE 10 originating request (Origination) from the UE 10.

The information element setting unit 32 sets up an information element indicating the establishment condition of the first communication call (PS call) of the UE 10 in the first communication system. Specifically, the information element setting unit 32 sets up the information element indicating whether the first call is established between the first communication system and the UE 10. Alternatively, the information element setting unit 32 sets up the information element indicating a data amount of the first communication call established between the first communication system and the UE 10

For example, the information element setting unit 32 sets up the information indicating that the first communication call is not established between the first communication system and the UE 10 when CSFB (PS handover) is started upon receiving a message (RRC CONNECTION REQUEST) requesting an establishment of the radio connection. On the other hand, the information element setting unit 32 sets up the information indicating that the first communication call is established between the first communication system and the UE 10 when CSFB (PS handover) is started without receiving a message (RRC CONNECTION REQUEST) requesting an establishment of the radio connection.

Alternatively, the information element setting unit 32 may manage the data amount of the first communication call established between the first communication system and the UE 10, and may set up the information element indicating the data amount of the first communication call.

The information element setting unit 32 sets up the information element in the message (HANDOVER REQUIRED) requesting the PS handover from the first communication system to the second communication system in the procedure of the PS handover.

The handover processor 33 controls the handover (CSFB) from the first communication system to the second communication system. Specifically, the handover processor 33 switches the method of CSFB based on the establishment condition of the first communication call (PS call) of the UE10 in the first communication system.

For example, the handover processor 33 stops the PS handover and starts a different procedure (Redirection, CCO (Cell Change Order), SRVCC (Single Radio Voice Call Continuity)) when the first communication call is not established between the first communication system and the UE 10 or the data amount of the first communication call established between the first communication system and the UE 10 is equal to or smaller than the predetermined threshold. Specifically, the handover processor 33 stops the PS handover and starts the different procedure (Redirection, CCO (Cell Change Order), SRVCC (Single Radio Voice Call Continuity)) when it is notified that while the PS bearer cannot be established, the CS bearer can be established. More specifically, the handover processor 33 instructs the UE 10 to perform a switch to the second communication system through the different procedure. Even more specifically, the handover processor 33 instructs the communication unit 31 to transmit such instruction information.

The handover processor 33 may instruct the UE 10 to establish the second communication call of which the establishment is requested between the second communication system and the UE 10, in addition to the instruction for the handover to the second communication system through the different procedure.

"Redirection" is a procedure in which the UE 10 changes to a standby state (Idle state) and then performs a transition to the second communication system. In "Redirection" the UE 10 newly attempts to establish the second communication call with the second communication system.

"CCO" is a procedure in which the UE 10 transitions to the standby state (Idle state) and then performs a transition to the second communication system. In "CCO", the UE 10 establishes the first communication call with the second communication system and then establishes the second communication call with the second communication system.

"SRVCC" is a procedure in which the UE 10 transitions to the second communication system without transitioning to the standby state (Idle state) . In "SRVCC", the UE 10 switches the first communication call established with the first communication system to the second communication call established with the second communication call.

The handover processor 33 continues the PS handover when the first communication call is established between the first communication system and the UE 10, or when the data amount of the first communication call established between the first communication system and the UE 10 exceeds the predetermined threshold.

### (Operation in Mobile Communication System)

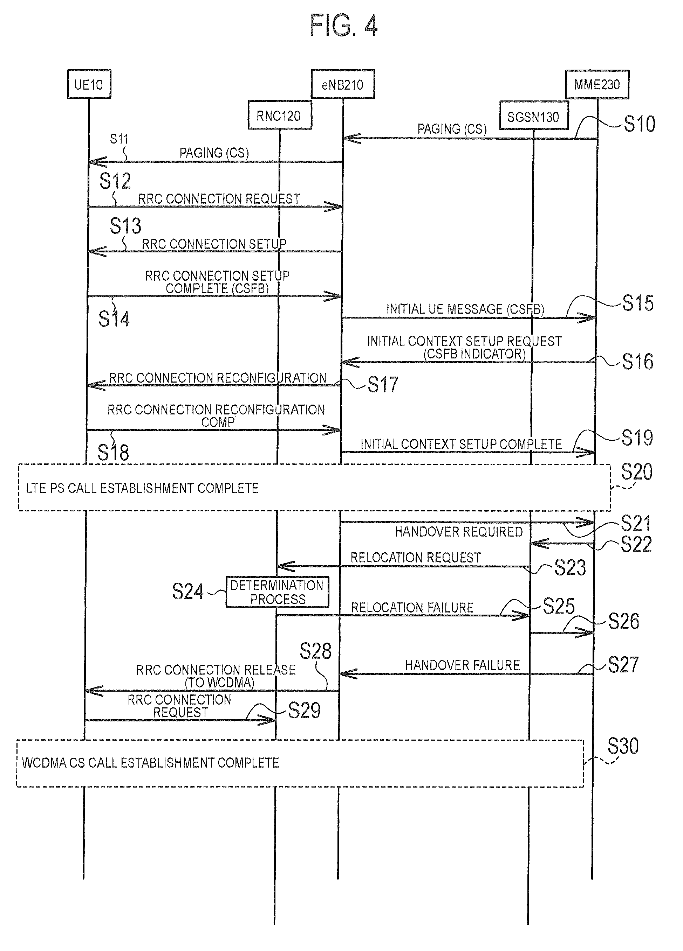

Hereinafter, operations in the mobile communication system according to the first embodiment are described with reference to the drawing. Fig. 4 is a sequence diagram showing operations in the mobile communication system 100 according to the first embodiment. Here, a case is exemplified where the network device 20 is the RNC 120.

Hereinafter, a case is described where the procedure of the PS handover as a procedure of CSFB starts when the establishment of the second communication call is requested for the reception of the second communication call in the first communication system. The first communication call is the PS call and the second communication is the CS call. The bearer for the first communication call is the PS bearer and the bearer for the second communication call is the CS bearer. Furthermore, a case is exemplified where the first communication system is LTE and the second communication system is UMTS (WCDMA).

Here, a case is described where the handover from the first communication system to the second communication is performed through the procedure of the PS handover for the reception of the second communication call (CD call) with reference to Fig. 4.

As shown in Fig. 4, in Step10, the MME 230 notifies the eNB 210 of a UE10 terminating call (paging). In Step 11, the eNB 210 notifies the UE 10 of the UE10 terminating call (paging).

In Step 12, the UE 10 transmits to the eNB 210, a message (RRC CONNECTION REQUEST) requesting the establishment of the radio connection for the PS call according to LTE.

In Step 13, the eNB 210 transmits to the UE 10, a message (RRC CONNECTION SETUP) for establishing the radio connection for the PS call according to LTE

In Step 14, the UE 10 transmits to the eNB 210, a message (RRC CONNECTION SETUP COMPLETE) notifying that the establishment of the radio connection for the PS call according to LTE is completed. Here, the UE 10 transmits the information element (CSFB Indicator) for identifying CSFB to the eNB 210.

In Step 15, the eNB 210 transmits to the MME 230, a message (Initial UE Message) indicating that CSFB is required.

In Step 16, the MME 230 transmits to the eNB 210, a message (Initial Context SETUP REQUEST) requesting the establishment of the PS call. The message (Initial Context SETUP REQUEST) includes the information element (CSFB Indicator) for identifying CSFB, a capability of the UE 10 in WDCMA, and the like.

In Step 17, the eNB 210 transmits to the UE 10, a message (RRC CONNECTION RECONFIGURATION) notifying the reconfiguration of the radio connection.

In Step 18, the UE 10 transmits to the eNB 210, a message (RRC CONNECTION RECONFIGURATION COMP) notifying that the reconfiguration of the radio connection is completed.

In Step19, the eNB 210 transmits to the MME 230, a message (Initial Context SETUP COMPLETE) notifying that the establishment of the PS call is completed.

In Step 20, establishment of the PS call between the eNB 210 and the UE 10 is completed.

In Step 21, the eNB 210 transmits to the MME 230, a message (HANDOVER REQUIRE) requesting the start of a handover procedure (PS handover) from LTE to WCDMA. For example, the eNB 210 sets up the information element indicating the establishment condition of the PS bearer of the UE 10 in LTE in the message (HANDOVER REQUIRED). Specifically, the eNB 210 sets up in the message (HANDOVER REQUIRED), an information element indicating whether the PS bearer is established between LTE and the UE 10, or an information element indicating a data amount of the PS bearer established between LTE and the UE 10.

In Step 22, the MME 230 transmits the message (HANDOVER REQUIRED) to the SGSN 130.

In Step 23, the SGSN 130 transmits to the RNC 120, a message (RELOCATION REQUEST) requesting a handover from LTE to WCDMA. The message (RELOCATION REQUEST) includes the information element indicating the establishment condition of the PS bearer of the UE 10 in LTE.

In Step 24, the RNC 120 determines whether to establish the PS bearer based on the establishment condition of the PS bearer of the UE 10 in LTE. In Fig. 4, the PS bearer is not established between LTE and the UE 10, and thus the RNC 120 determines not to establish the PS bearer. As described above, when the PS bearer is established between LTE and the UE 10, it may be determined whether to establish the PS bearer based on whether the data amount of the PS bearer established between LTE and the UE 10 is equal to or smaller than the predetermined threshold.

In Step 25, the RNC 120 transmits to the SGSN 130, a message (RELOCATION FAILURE) notifying that the handover from LTE to WCDMA has failed. The message (RELOCATION FAILURE) includes information indicating that while the PS bearer cannot be established, the CS bearer can be established. For example, the message (RELOCATION FAILURE) includes "Cause" indicating the reason why the handover has failed.

In Step 26, the SGSN 130 forwards the message (RELOCATION FAILURE) to the MME 230.

In Step 27, the MME 230 transmits to the eNB 210, a message (HANDOVER FAILURE) notifying that the handover procedure (PS handover) from LTE to WCDMA has failed.

In Step 28, the eNB 210 transmits a message (RRC CONNECTION RELEASE) instructing the release of the radio connection for the PS call in LTE to the UE 10. The message (RRC CONNECTION RELEASE) includes information instructing a connection to WCDMA. For example, the message (RRC CONNECTION RELEASE) includes "RedirectedCarrierInfo" indicating the frequency of the handover target and "IdleModeMobilityControlInfo" indicating the priority of a cell to be reselected. Specifically, the UE 10 starts the different procedure (Redirection, CCO (Cell Change Order), SRVCC (Single Radio Voice Call Continuity)) in place of the PS handover.

In Step 29, the UE 10 transmits to the RNC 120, a message (RRC CONNECTION REQUEST) requesting the establishment of the CS call according to WCDMA.

In Step 30, the CS call is established between the RNC 120 and the UE 10.

In Fig. 4, the case has been described in which the PS bearer is not established in LTE. It is matter of course that the embodiment is not limited to this.

### (Operation and Effect)

In the first embodiment, the RNC 120 determines whether to establish the bearer for the first communication call between the second communication system and the UE 10 based on whether the first communication call is established between the first communication system and the UE 10, or the data amount of the first communication call established between the first communication system and the UE 10.

Thus, the wasteful consumption of resource used for the bearer for the first communication call established between the second communication system and the UE 10 is prevented, and the resource used for the bearer for the first communication call can be effectively utilized.

For example, the RNC 120 does not establish the bearer for the first communication call between the second communication system and the UE 10 when the first communication call is not established between the first communication system and the UE 10 or the data amount of the first communication call established between the first communication system and the UE 10 is equal to or smaller than the predetermined threshold. Instead, the RNC 120 notifies the first communication system that while the first communication call cannot be established, the second communication call can be established. Thus, the first communication call is not established through the PS handover procedure in the second communication system when the bearer for the first communication call is less likely to be needed. Accordingly, the resource required for the first communication call is saved.

Alternatively, the RNC 120 establishes the bearer for the first communication call between the second communication system and the UE 10 and releases the established first communication call when the first communication call is not established between the first communication system and the UE 10 or the data amount of the first communication call established between the first communication system and the UE 10 is equal to or smaller than the predetermined threshold. Thus, the first communication call established through the PS handover procedure is released in the second communication system when the bearer for the first communication call is less likely to be needed. Thus, the resource required for the established first communication call is saved.

Alternatively, the RNC 120 establishes the bearer for the first communication call between the second communication system and the UE 10 using resource in saving manner when the first communication call is not established between the first communication system and the UE 10 or the data amount of the first communication call established between the first communication system and the UE 10 is equal to or smaller than the predetermined threshold. Thus, the bearer for the first communication call is established through the PS handover procedure using resource in saving manner in the second communication system when the bearer for the first communication call is less likely to be needed. Thus, the resource required for the established first communication call is saved.

### [Other Embodiments]

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

The first communication system and the second communication system are not limited to the communication systems supporting LTE and WCDMA, and may be other systems (e.g., a communication system supporting WiMAX).

For example, in the embodiment described above, the case is exemplified in which the first communication system is LTE that does not support the second communication call (CS call) . Alternatively, the first communication system may support both of the first communication call (PS call) and the second communication call (CS call).

In the embodiment described above, a case is exemplified in which the PS handover starts as a part of CSFB. However the embodiment is not limited to CSFB.

In Fig. 4 described above, reception of the second communication call (CS call) is exemplified. However, the embodiment is not limited to this and may be applied to the transmission of the second call (CS call).

In Fig. 4 described above, a case is exemplified where the first communication call is not established in the first communication system. Specifically, in Fig. 4, a case is exemplified where the UE 10 is in the standby state (Idle state) . However, the embodiment is not limited to this and can be applied to a case where the UE 10 is in the communicating state (Connected state). In such a case, processing for establishing the first communication call in the first communication system is omitted.

In the embodiment described above, the network device 30 (eNB 210) stops the PS handover and starts a different procedure (Redirection, CCO (Cell Change Order), SRVCC (Single Radio Voice Call Continuity)) upon being notified that while the first communication call cannot be established, the second communication can be established. However, the embodiment is not limited to this. Specifically, the network device 30 (eNB 210) may immediately stop the PS handover and instruct the UE 10 to perform handover to the second communication system through the different procedure when the first communication call is not established between the first communication system and the UE 10 or the data amount of the first communication call established between the first communication system and the UE 10 is equal to or smaller than the predetermined threshold. In such a case, the transmission of "HANDOVER REQUIRED" to the second communication system can be omitted.

In the embodiment described above, the case is exemplified where network device 20 is the RNC 120. However, the embodiment is not limited to this. The network device 20 may be the SGSN 130. Alternatively, the network device 20 may be a home gateway (HNB-GW) that manages a specific cell (femtocell, CSG cell, or home cell) in the second communication system.

In the embodiment described above, the case is exemplified where the network device 30 is the eNB 210. However, the embodiment is not limited to this. The network device 30 may be the MME 230. Alternatively, the network device 30 may be a home gateway (HeNB-GW) that manages a specific cell (femtocell, CSG cell, or home cell) in the first communication system.

The operations of the network device 20 and the network device 30 may be implemented by hardware, a software module implemented by a processor, or a combination thereof.

The software module may be stored in a storage medium of any types such as a RAM (Random Access Memory), a flash memory, a ROM (Read Only Memory), an EPROM (Erasable Programmable ROM), an EEPROM (Electronically Erasable and Programmable ROM), a resistor, a hard disk, a removable disk, and a CD-ROM.

The storage medium is connected to a processor so that the processer can read and write information from and to the storage medium. The storage medium may be integrated in a processor. The storage medium and the processor may be provided in an ASIC. The ASIC may be provided in the network device 20 or the network device 30. The storage medium and the processor may be provided in the network device 20 or the network device 30 as discrete components.

Entire contents of Japanese Patent Application Publication No. 2010-029999 (filed on February 15, 2010) are herein incorporated by reference.

### INDUSTRIAL APPLICABILITY

The present invention can provide a mobile communication system, a network device, and a mobile communication method that allow an effective utilization of resource for a PS bearer established between a second communication system and a mobile communication terminal, and thus is useful in radio communications and the like.

### EXPLANATION OF THE REFERENCE NUMERALS

10...communication terminal device, 20...network device, 21...communication unit, 22...identification unit, 23...determination unit, 24...establishment unit, 30...network device, 31...communication unit, 32...information element setting unit, 33...handover processor, 50...core network, 110...NB, 111...cell, 120...RNC, 130...SGSN, 210...eNB, 211...cell, 230...MME, 100...mobile communication system

## Claims

1. A mobile communication system comprising a first communication system that supports a first communication call as a call type and a second communication system that supports both of the first communication call and a second communication call as a call type, the mobile communication system configured to perform a handover procedure though which a bearer for the first communication call established between the first communication system and a mobile communication terminal is switched to a bearer for the first communication call established between the second communication system and the mobile communication terminal, wherein
in the handover procedure, the second communication system identifies whether the first communication call is established between the first communication system and the mobile communication terminal or a data amount of the first communication call established between the first communication system and the mobile communication terminal, and
the second communication system determines whether to establish the bearer for the first communication call between the second communication system and the mobile communication terminal based on whether the first communication call is established between the first communication system and the mobile communication terminal or the data amount of the first communication call established between the first communication system and the mobile communication terminal.

2. The mobile communication system according to claim 1, wherein the second communication system does not establish the bearer for the first communication call between the second communication system and the mobile communication terminal and notifies the first communication system that, while the first communication call is not able to be established, the second communication call is able to be established, when the first communication call is not established between the first communication system and the mobile communication terminal or when the data amount of the first communication call established between the first communication system and the mobile communication terminal is equal to or smaller than a predetermined threshold.

3. The mobile communication system according to claim 1, wherein
the first communication system does not support the second communication call,
the handover procedure starts when establishment of the second communication call is requested in the first communication system, and
the second communication system establishes the bearer for the first communication call between the second communication system and the mobile communication terminal and releases the established first communication call, when the first communication call is not established between the first communication system and the mobile communication terminal or when the data amount of the first communication call established between the first communication system and the mobile communication terminal is equal to or smaller than a predetermined threshold.

4. The mobile communication system according to claim 1, wherein the second communication system establishes the bearer for the first communication call between the second communication system and the mobile communication terminal using resource in saving manner, when the first communication call is not established between the first communication system and the mobile communication terminal or when the data amount of the first communication call established between the first communication system and the mobile communication terminal is equal to or smaller than the predetermined threshold.

5. The mobile communication system according to claim 2, wherein
the first communication system does not support the second communication call,
the handover procedure starts when establishment of the second communication call is requested in the first communication system, and
the first communication system stops the handover procedure and instructs the mobile communication terminal to perform a switch to the second communication system through a different handover procedure, when being notified that the first communication call is not able to be established but the second communication call is able to be established.

6. The mobile communication system according to claim 1, wherein, in the handover procedure, the first communication system notifies the second communication system whether the first communication call is established between the first communication system and the mobile communication terminal or of the data amount of the first communication call established between the first communication system and the mobile communication terminal.

7. A network device provided in a first communication system in a mobile communication system including the first communication system that supports a first communication call as a call type and a second communication system that supports both of the first communication call and a second communication call as a call type, the mobile communication system configured to perform a handover procedure though which a bearer for the first communication call established between the first communication system and a mobile communication terminal is switched to a bearer for the first communication call established between the second communication system and the mobile communication terminal, the device comprising
a notification unit configured to notify, in the handover procedure, the second communication system whether the first communication call is established between the first communication system and the mobile communication terminal or of a data amount of the first communication call established between the first communication system and the mobile communication terminal.

8. A network device provided in a first communication system in a mobile communication system including the first communication system that supports a first communication call as a call type and a second communication system that supports both of the first communication call and a second communication call as a call type, the mobile communication system configured to perform a handover procedure though which a bearer for the first communication call established between the first communication system and a mobile communication terminal is switched to a bearer for the first communication call established between the second communication system and the mobile communication terminal when an establishment of the second communication call is requested in the first communication system, the device comprising
an instruction unit configured to stop the handover procedure and instruct the mobile communication terminal to perform a switch to the second communication system through a different handover procedure, when the first communication call is not established between the first communication system and the mobile communication terminal or a data amount of the first communication call established between the first communication system and the mobile communication terminal is equal to or smaller than a predetermined threshold.

9. A network device provided in a second communication system in a mobile communication system including a first communication system that supports a first communication call as a call type and the second communication system that supports both of the first communication call and a second communication call as a call type, the mobile communication system configured to perform a handover procedure though which a bearer for the first communication call established between the first communication system and a mobile communication terminal is switched to a bearer for the first communication call established between the second communication system and the mobile communication terminal, the device comprising:
an identification unit configured to identify whether the first communication call is established between the first communication system and the mobile communication terminal or a data amount of the first communication call established between the first communication system and the mobile communication terminal; and
a determination unit configured to determine whether to establish the bearer for the first communication call between the second communication system and the mobile communication terminal based on whether the first communication call is established between the first communication system and the mobile communication terminal or the data amount of the first communication call established between the first communication system and the mobile communication terminal.

10. A mobile communication method employed in a mobile communication system including a first communication system that supports a first communication call as a call type and a second communication system that supports both of the first communication call and a second communication call as a call type, the mobile communication system configured to perform a handover procedure though which a bearer for the first communication call established between the first communication system and a mobile communication terminal is switched to a bearer for the first communication call established between the second communication system and the mobile communication terminal, the method comprising the steps of:
identifying, by the second communication system in the handover procedure, whether the first communication call is established between the first communication system and the mobile communication terminal or a data amount of the first communication call established between the first communication system and the mobile communication terminal; and
determining, by the second communication system, whether to establish the bearer for the first communication call between the second communication system and the mobile communication terminal based on whether the first communication call is established between the first communication system and the mobile communication terminal or the data amount of the first communication call established between the first communication system and the mobile communication terminal.
